# EUROPÄISCHE PATENTSCHRIFT

(11) **EP 0 739 611 B1**
(45) Veröffentlichungstag und Bekanntmachung des Hinweises auf die Patenterteilung: **29.08.2001**
(21) Anmeldenummer: 96104067.2
(22) Anmeldetag: 14.03.1996
(51) Int. Cl.: A61C 1/05, A61C 1/08

(54) **Zahnärztliches Behandlungsinstrument mit Beleuchtungseinrichtung**
Dental treatment instrument with illumination device
Instrument de traitement dentaire avec dispositif d'éclairage

(30) Priorität: 27.03.1995 DE 19511262
(43) Veröffentlichungstag der Anmeldung: 30.10.1996
(73) Patentinhaber: Sirona Dental Systems GmbH, 64625 Bensheim (DE)
(72) Erfinder: Wohlgemuth, Jürgen, Dipl.-Ing., 64283 Darmstadt (DE)
(74) Vertreter: Sommer, Peter

(56) Entgegenhaltungen:
- EP-A- 0 547 468
- DE-U- 9 204 412
- DE-U- 9 312 611
- US-A- 3 364 576
- US-A- 4 340 366
- US-A- 5 308 242

## Beschreibung

Die Erfindung bezieht sich auf ein zahnärztliches Behandlungsinstrument welches eine Beleuchtungseinrichtung mit einem Lichtleiter enthält, der am Kopfteil des Instruments endet und dort ein Lichtaustrittsfenster aufweist, welches so angeordnet ist, daß der Strahlengang des austretenden Lichts auf die Spitze des Behandlungswerkzeuges gerichtet ist und dem über eine Leitung ein Kühlmittel unter Druck zuführbar ist, welches auf die Werkzeugspitze gerichtet austritt.

Derartige Behandlungsinstrumente sind beispielsweise aus DE-A1-3 108 967, EP-A1-0 075 096, EP-A1-0 441 952 oder DE-A1-4 142 113 bekannt.

In der Praxis zeigt sich, daß der bei Präparationsarbeiten anfallende Bohrstaub die Sicht zum Präparationsfeld beeinträchtigen bzw. die Lichtaustrittsstelle verschmutzen kann, wodurch nach kurzer Zeit nur noch ein Bruchteil des Lichts der Beleuchtungseinrichtung an der Präparationsstelle zur Verfügung steht.

Auch der durch das Kühlmedium erzeugte Nebel kann, vermischt mit Bohrstaub und anderen Partikeln, die Sicht zum Präparationsfeld beeinträchtigen bzw. die Lichtaustrittsstelle verschmutzen.

Aus der US-4 917 603 sowie WO 91/03209 ist es bekannt, benachbart dem Lichtaustrittsfenster eines Lichtleiters an die Zuführleitung eines Spülmediums angeschlossene Düsen anzuordnen, deren Öffnungen auf das Lichtaustrittsfenster gerichtet sind, wodurch durch Zufuhr von beispielsweise Druckluft das Lichtaustrittsfenster von Spray und/oder Staubpartikeln freigeblasen werden kann.

Aus der DE-9 204 412 U1 ist es bei einem Laserhandstück bekannt, in Nähe der Austrittsstelle des Laserstrahls eine Sprühdüse vorzusehen, über die Kühl- oder Reinigungsflüssigkeit in den dem Auslaß unmittelbar benachbarten Bereich gesprüht werden kann. Dadurch kann einerseits eine Reinigung des Auslasses erfolgen und andererseits eine Kühlung des von der Laserstrahlung beaufschlagten Materials, beispielsweise einer Zahnoberfläche, bewirkt werden.

In der EP-A 547 468 A3 wird ein zahnärztliches Instrument mit Mitteln zur Kühlung der Präparationsstelle beschrieben, bei dem zur Kühlung der Präparationsstelle Wasser verwendet wird. Das Wasser tritt, gemäß einer der dort aufgezeigten Varianten, am Instrumentenkopf als den Werkzeugschaft konzentrisch umgebender und auf die Präparationsstelle ausgerichteter Wassermantel aus. Der Wassermantel wird von einem stirnseitig des Kopfgehäuses angeordneten Ringdüseneinsatzteil gebildet der am Umfang eine Vielzahl von offenen Verteilerkanälen aufweist, die zusammen mit einem Ringkanal die Austrittsöffnungen für das Kühlwasser bilden. Ein Lichtleiter mit einer Lichtaustrittsstelle ist bei diesem Instrument nicht vorhanden.

Aus der US-A-5 308 242 ist ein zahnärztliches Bohrinstrument mit einem Lichtleiter bekannt, bei dem unmittelbar benachbart der Lichtaustrittsstelle am Kopfteil des Instruments Austrittsdüsen für Luft und Wasser angeordnet sind, deren Öffnungen auf die Werkzeugspitze gerichtet sind. Mit dem auf die Werkzeugspitze gerichteten Wasser- und Luftstrahl kann die Präparationsstelle gekühlt und das ausgebohrte Material entfernt werden. Mit dem Luftstrahl kann zusätzlich noch die Präparationsstelle getrocknet werden.

Der im Patentanspruch 1 angegebenen Erfindung liegt die Aufgabe zugrunde, ein zahnärztliches Behandlungsinstrument der eingangs genannten Gattung anzugeben, bei dem auf vergleichsweise einfache Weise eine Verschmutzung der Lichtaustrittsstelle weitgehend verhindert und damit die Effizienz der Lichtübertragung von der Lichtaustrittsstelle zur Präparationsstelle verbessert werden kann.

Dadurch, daß das Spülmedium sowohl auf das Lichtaustrittsende als auch auf die Werkzeugspitze gerichtet austritt, läßt sich ein besonders wirksamer Effekt erzielen.

Das Spülmedium kann ein Gas, in der Regel Druckluft, oder eine Flüssigkeit, vorzugsweise steriles Wasser, sein. Ein gasförmiges Spülmedium setzt man vorteilhafterweise dann ein, wenn das Instrument schon mit einer Einrichtung zur Zufuhr eines Kühlmittels zur Kühlung der Präparationsstelle versehen ist. Das gasförmige Spülmedium kann dann zusätzlich zum Kühlmittelstrahl des Kühlmittels auf die Werkzeugspitze gerichtet werden. Mit dieser Maßnahme läßt sich der Strahlengang des Lichts von störenden Partikeln freihalten.

Vorteilhafterweise ist der Spülmedienaustrittskanal als Ringkanal ausgebildet, der den Lichtleiter konzentrisch umgibt. In diesem Falle erweist es sich als vorteilhaft, das Schließelement hülsenförmig auszubilden und als leicht auswechselbares Bauelement in den Spülmedienkanal einzusetzen.

Weitere Vorteile ergeben sich aus der nachfolgenden Beschreibung eines Ausführungsbeispiels. Es zeigen:
Figur 1 eine erste Ausführungsform der Erfindung,
Figur 2 eine zweite Ausführungsform,
Figuren 3 und 4 eine weitere Variante in einer Detaildarstellung.

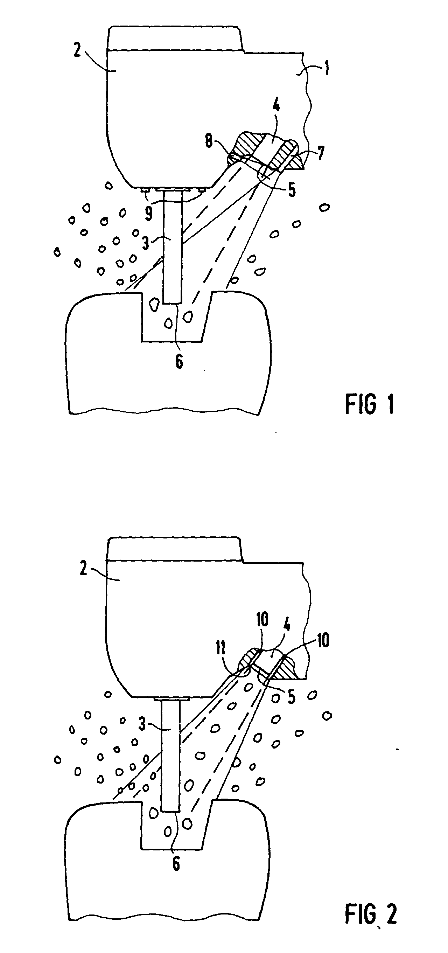

Die Figur 1 zeigt den vorderen Teil eines allgemein mit 1 bezeichneten zahnärztlichen Behandlungsinstruments, in dessen Kopfgehäuse 2 ein Werkzeug 3 (Bohrer, Fräser od.dgl.) gehaltert ist, der in bekannter Weise mittels eines nicht dargetellten Antriebes in Rotationsbewegung versetzbar ist.

Mit 4 ist ein Lichtleiter bezeichnet, der Teil einer nicht näher gezeigten Beleuchtungseinrichtung ist, und dessen freies Ende ein Lichtaustrittsfenster 5 aufweist, welches so angeordnet ist, daß der Strahlengang des austretenden Lichts auf die Werkzeugspitze 6 und damit auf die Präparationsstelle gerichtet ist.

Unmittelbar benachbart dem Lichtleiterende ist eine erste Düse 7 angeordnet, die mit einer nicht dargestellten Zufuhrleitung für ein Spülmedium (Druckluft oder Druckwasser) verbunden ist. Die Öffnung der Düse 7 ist so ausgebildet bzw. angeordnet, daß das austretende Spülmedium auf die Werkzeugspitze 6 bzw. auf die Präparationsstelle gerichtet ist.

Mit 8 ist eine weitere, an die genannte Zufuhrleitung des Spülmediums angeschlossene Düse bezeichnet, deren Öffnung direkt auf das Lichtaustrittfenster 5 gerichtet ist. Das über die Düse 8 zugeführte Spülmedium hält das Lichtaustrittsfenster des Lichtleiters 4 von Partikeln frei, während das aus der Düse 7 austretende Spülmedium den Strahlengang des austretenden Lichts von Partikeln freihält. Eine besonders vorteilhafte Wirkung ergibt sich, wenn über beide Düsen Spülmedium austritt.

Der aus der Düse 8 austretende Strahl des Spülmediums wird an der Oberfläche des Lichtaustrittsfensters umgelenkt, wodurch eventuell dort sich abgesetzte Verunreinigungen weggeblasen oder weggespült werden.

Die aufgezeigte Anordnung der Düsen ist vorteilhaft bei Zufuhr eines gasförmigen Spülmediums, z.B. Druckluft. Bei Verwendung einer Flüssigkeit, z.B. sterilem Wasser, ist es vorteilhaft, nur auf das Lichtaustrittsfenster 5 gerichtete Düsen 8 vorzusehen, diese aber entgegengesetzt, wie in der Figur dargestellt, anzuordnen, was bedeutet, daß die Spülflüssigkeit dann von außen nach innen gerichtet über das Lichtaustrittsfenster geleitet wird.

Wenn das Behandlungsinstrument mit einer Einrichtung zur Zufuhr von Kühlmittel an die Präparationsstelle versehen ist, die in bekannter Weise am Kopfgehäuse um das Werkzeug herum angeordnete, ebenfalls auf die Werkzeugspitze ausgerichtete Düsen enthält (in der Figur mit Pos. 9 angedeutet), dann ist es vorteilhaft, als Spülmedium ausschließlich ein gasförmiges Medium einzusetzen..

Die Figur 2 zeigt eine Variante, bei der konzentrisch um das Ende des Lichtleiters 4 am Umfang mehrere Kanäle 10 angeordnet sind, über die das Spülmedium austreten kann, wobei an der Austrittsstelle durch konstruktive Gestaltung des Kopfgehäuses 2 Ablenkkanten 11 gebildet werden, die bewirken, daß ein Teil des Spülmediums zum Lichtaustrittsfenster 5 hin geleitet wird. Das Spülmedium wird also nicht nur direkt auf die Werkzeugspitze, sondern auch auf das Lichtaustrittsfenster geleitet.

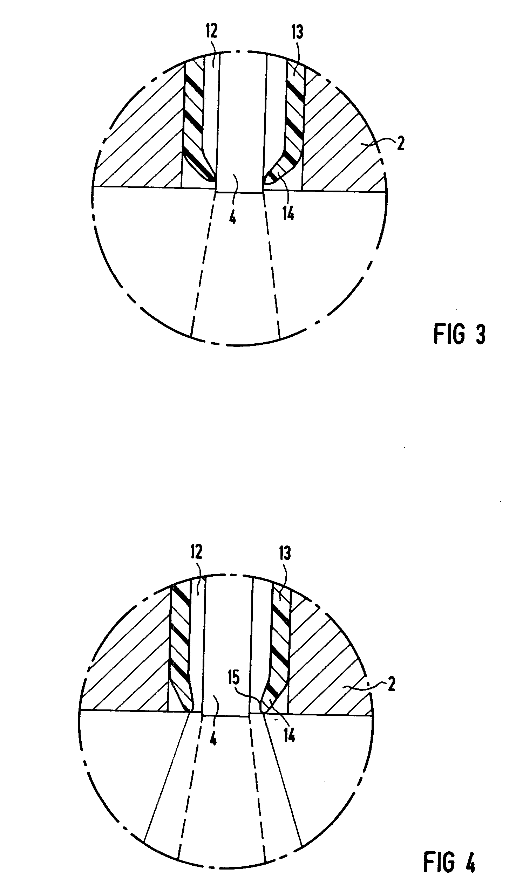

Die Figuren 3 und 4 zeigen eine weitere vorteilhafte Ausgestaltung der Erfindung in vergrößerter Darstellung, wobei jeweils nur der Bereich des Kopfgehäuses 2 um das Lichtaustrittsende herum gezeigt ist. Bei dieser Variante ist ein das Ende des Lichtleiters 4 konzentrisch umgebender ringförmiger Zufuhrkanal 12 vorgesehen, in welchem ein Schließelement 13 eingesetzt ist. Das Schließelement 13 weist an seinem freien Ende eine elastische Dichtlippe 14 auf. Die Dichtlippe 14 umschließt im drucklosen Zustand das Lichtleiterende (Figur 3), während sie bei vorhandenem Druck, also wenn Spülmittel austritt, so weit geöffnet ist, daß ein gezielt gerichteter Spülstrahl austreten kann (Figur 4).

Damit der vorgenannte Effekt einer gleichzeitigen Spülung des Lichtaustrittsfensters gegeben ist, kann die Dichtlippe entsprechend geformte Ablenkkanten 15 für das austretende Spülmedium aufweisen. Das Schließelement 13 ist vorteilhafterweise als leicht auswechselbares Teil im Ringkanal 12 eingesetzt.

## Patentansprüche

1. Zahnärztliches Behandlungsinstrument, mit einer Beleuchtungseinrichtung die einen Lichtleiter (4) enthält, der am Kopfteil (2) des Instruments (1) endet und dort ein Lichtaustrittsfenster (5) aufweist, welches so angeordnet ist, dass der Strahlengang des austretenden Lichts auf die Werkzeugspitze (6) des Behandlungswerkzeuges (3) gerichtet ist, und mit mindestens einem am Ende des Lichtleiters (4) und benachbart diesem an seinem Umfang angeordneten, an die Zufuhrleitung eines unter Druck stehenden gasförmigen oder flüssigen Spülmediums angeschlossenen Spülmediumkanal (10, 12) dessen Austrittsende auf die Werkzeugspitze (6) gerichtet ist, **dadurch gekennzeichnet**, dass das Austrittsende des mindestens einen Spülmediumkanals (10, 12) eine Ablenkkante (11, 15) bildet, welche das austretende Spülmedium in Richtung auf das Lichtaustrittsfenster (5) und auf die Werkzeugspitze (6) lenkt.

2. Zahnärztliches Behandlungsinstrument nach Anspruch 1, **dadurch gekennzeichnet**, dass die Ablenkkante (15) von einer elastischen Dichtlippe (14) eines in das Ende des Spülmediumkanals (12) eingesetzten, selbsttätig wirkenden Schließelements (13) gebildet ist, welches die Düsenöffnung des Spülmediumkanals (12) bei vorhandenem Druck des Spülmediums öffnet und bei fehlendem Druck verschließt.

3. Zahnärztliches Behandlungsinstrument nach Anspruch 2, **dadurch gekennzeichnet**, dass das Austrittsende des Spülmediumkanals als ein das Ende des Lichtleiters (4) konzentrisch umgebender Ringkanal (12) ausgebildet ist, in welchem das Schließelement (13) eingesetzt ist.

## Claims

1. Dental treatment instrument, with a lighting device comprising a light guide (4) which ends at the head part (2) of the instrument (1) and there has a light exit aperture (5) which is arranged in such a way that the beam path of the emerging light is directed towards the tool tip (6) of the treatment tool (3), and with at least one irrigation medium channel (10, 12) which is arranged at the end of the light guide (4), adjacent to the latter at its periphery, and which is connected to the delivery line of a pressurized gaseous or liquid irrigation medium, the outlet end of the irrigation medium channel (10, 12) being directed towards the tool tip (6), **characterized in that** the outlet end of the at least one irrigation medium channel (10, 12) forms a deflection edge (11, 15) which deflects the emerging irrigation medium in the direction of the light exit aperture (5) and towards the tool tip (6).

2. Dental treatment instrument according to Claim 1, **characterized in that** the deflection edge (15) is formed by an elastic sealing lip (14) of an independently operating closure element (13) which is fitted in the end of the irrigation medium channel (12) and which opens the nozzle mouth of the irrigation medium channel (12) when the irrigation medium is under pressure and closes it if there is no pressure.

3. Dental treatment instrument according to Claim 2, **characterized in that** the outlet end of the irrigation medium channel (12) is designed as an annular channel (12) which concentrically surrounds the end of the light guide (4) and in which the closure element (13) is fitted.

## Revendications

1. Instrument dentaire de traitement avec un dispositif d'éclairage qui comprend un guide de lumière (4) qui se termine sur la pièce de tête (2) de l'instrument (1) et qui y présente une fenêtre de sortie de lumière (5) qui est disposée de telle manière que la marche des rayons de la lumière qui sort est dirigée sur la pointe d'outil (6) de l'outil de traitement (3), et avec au moins un canal d'agent de rinçage (10, 12) qui est disposé à l'extrémite du guide de lumière (4) et, voisin de celui-ci, sur sa circonférence et qui est connecté à la conduite d'amenée d'un agent de rinçage gazeux ou liquide sous pression, l'extrémité de sortie dudit canal étant dirigée sur la pointe d'outil (6), **caractérisé par le fait** que l'extrémité de sortie dudit canal d'agent de rinçage (10, 12) existant au moins forme une arête de déviation (11, 15) qui dirige l'agent sortant de rinçage vers la fenêtre de sortie de lumière (5) et vers la pointe d'outil (6).

2. Instrument dentaire de traitement selon la revendication 1, **caractérisé par le fait** que l'arête de déviation (15) est formée par une lèvre élastique d'étanchéité (14) d'un élément de fermeture (13) qui est inséré dans l'extrémité du canal d'agent de rinçage (12) et agit automatiquement et qui ouvre l'ouverture de buse du canal d'agent de rinçage (12) en cas de pression existante de l'agent de rinçage et qui la ferme lorsqu'il n'y a pas de pression.

3. Instrument dentaire de traitement selon la revendication 2, **caractérisé par le fait que** l'extrémité de sortie du canal d'agent de rinçage (12) est réalisée en tant que canal annulaire (12) qui entoure de façon concentrique l'extrémité du guide de lumière (4) et dans lequel l'élément de fermeture (13) est inséré.
